# EUROPEAN PATENT APPLICATION

(11) **EP 2 604 449 A1**
(43) Date of publication of application: **19.06.2013**
(21) Application number: 12195585.0
(22) Date of filing: 05.12.2012
(51) Int. Cl.: B60C 15/04

(54) **Bead structure for a pneumatic tire**

(30) Priority: 13.12.2011 US 201113324403
(71) Applicant: The Goodyear Tire & Rubber Company, Akron, OH 44316-0001 (US)
(72) Inventor: Thomas, Jean-Louis, B-6700 Waltzing (BE); Duval, Yann Bernard, L-7724 Walferdange (LU); Depouhon, Francois, B-6700 Arlon (BE); Sieber, Andreas, D-66663 Merzig (DE); Khiri, Mohammed, B-6700 Arlon (BE)
(74) Representative: Kutsch, Bernd

(57) **Abstract**

A pneumatic tire comprising a bead structure (20) comprising of from 3 to 300 cords is disclosed. Each cord comprises at least one strand or filament wrapped by at least two strands or filaments.

## Description

### Technical Field

The present invention relates to tires and, more particularly, to bead structures for pneumatic tires.

### Background of the Invention

A tire bead is that part of a tire which has a function of locating and fixing textile or steel cords of a carcass ply, determining the internal periphery of the tire, and anchoring the tire onto a wheel rim. The tire bead may be an annular, tensile member or inextensible hoop. Tires have at least two tire beads located within the rubber or elastomeric matrix that makes up the radially inner-most circumference on each side of the tire. There are three conventional categories of tire beads, strap beads, single wire beads, and single cable beads.

A strap bead may have a bead core constructed by winding a strip of wire-rubber matrix made of a row of several wires buried in rubber. The rubber maintains the bead position and prevent fretting of the wire into adjacent components of the tire. A strap bead may be easy and economical to manufacture. There are, however, some drawbacks to strap beads. First, the inner and outer ends of the strap overlap and may be spliced, wrapped, or stapled together. The weakest region of this type of bead is at the overlap of the strap ends. Also, in the manufacture of a pneumatic tire incorporating strap beads, the rows and lines of the wire-rubber matrix may fall into disorder during the tire building and curing steps, thereby adversely effecting the uniformity of the tire.

A single wire bead may be constructed by wrapping a single strand of rubber coated bead wire into a bundle or hoop of a desired cross sectional shape. The cross-sectional shape may be hexagonal, triangular, square, or pentagonal. The number of turns that the bead wire is wound depends upon the strength and/or cross-sectional area of the tire bead desired. For example, a single rubber-coated bead wire may be wrapped nineteen times into a cylindrical bundle or hoop that forms a hexagonal shaped bead. The wraps may begin on the inner row, left-hand corner, move to the right, then up and back toward the left, and then up and to the right. The free ends of the bead wire may be secured by a number of techniques including pushing them into the bundle, and/or stapling or taping them to the bundle. A single wire bead is often the strongest of the conventional beads. However, since a single wire bead may be wound of a single wire, production time is often longer and generally more expensive to manufacture. Also, the free ends of the wound bead wire may have a spring-back nature and loosen from the bundle causing tire misalignments, a protuberance from the tire, and/or some tire imbalance.

A cable bead consists of a core hoop formed of a single wire having its ends typically welded together. Then a cable, consisting of one or more filaments of wire, may be helically wound around the core hoop. Next, one free end of each filament may be connected to the opposite free end, typically by inserting the free ends into a ferrule and crimping the ferrule. However, the core may break at the weld, the cable filament wire may break at the ferrule causing the free ends of the wound cable wire, which have a spring-back nature, to loosen from the bundle causing tire misalignments, a protuberance from the tire, and/or some tire imbalance. Another conventional cable bead design is constructed of a core hoop formed of a group of wires twisted together. The ends of the wires forming the core hoop may be secured to each other, typically by welding them together. Then, a cable consisting of one or more filaments of wire may be helically wound around the core hoop. The ends of each filament of the cable may be connected to each other, typically by inserting them into a ferrule and crimping the ferrule to secure the ends therein. When two or more cable layers are wound about the core, the layers may be wound in opposite directions to each other. Time and expenses may occur due to the core being formed of a group of twisted wires. Also, the cable filament(s) may tend to break at the ferrule causing the free ends of the wound cable wire, which have a spring-back nature to loosen from the bundle causing tire misalignments, a protuberance from the tire, and/or some tire imbalance.

Still another conventional cable bead design is constructed of a core having three convolutions of wire laid side by side in such a relation as to form a triangular cross section, the arrangement being such that two of the convolutions lie side by side and the third lies on the outer side of these two convolutions directly over their adjacent sides. This core may be formed of triangular cross section with one of its sides toward the inner side of the core and the inner side of the completed grommet and the apex of the triangle toward the outer side of the grommet. The three convolutions may be formed from a continuous piece of wire. The ends of the wire may form the core secured to each other, as by welding them together. Then, a plurality of convolutions of spirals may be wound upon the core with the spirals of several convolutions lying side by side and forming a complete layer or casing. The end of the wire forming the surrounding casing may be secured in position in any suitable manner. When the surrounding casing of spirally formed wire has been completed, the spirals of the casing may be arranged approximately in a circle about the triangular core.

The grommet so formed as an intermediate product of construction may then be subjected to heavy pressure to expand it to a desired size. While so expanding the grommet, the casing of spirals may assume a configuration more or less approximating the cross-sectional shape of the core so that the completed grommet is substantially triangular in cross-section. During the intermediate stage of construction, the spirals of the casing may be arranged approximately in a circle about the triangular core. However, after the grommet has been formed into an intermediate article of manufacture, the grommet may be stretched to enlarge it to the precise diameter desired for the completed grommet. While the multiple convolutions of single wound wire forming the triangular core of the bead may have enough flexibility that the bead portions of the tire may be mounted on a rim, such convolutions must concurrently be stiff and strong enough that the tire remains mounted on the rim during the stresses generated under normal operating conditions. Moreover, the wound wire may be stretched beyond its elastic limit and therefore unable to return to its design shape. The core may then be unable to stretch while retaining its functional requirements due to the strength requirements of the grommet. This ability to stretch is even less likely in the bead design where the ends of the wire forming the core are joined together, as by welding. With this design, the core may have the tendency to break at the weld.

Thus, despite the existence of several types of conventional bead structures, there still exists a need for an improved tire bead construction that may reduce or eliminate the above-described difficulties.

### Summary of the Invention

The invention relates to a tire in accordance with claim 1.

Dependent claims refer to preferred embodiments of the invention.

In accordance with the present invention, a pneumatic tire has a bead structure provided therein. The bead structure is preferably defined by a homogeneous arrangement of between 3-300 cords, or 15-100 cords. In one preferred aspect, each wire cord comprises at least one metal strand wrapped by at least two metal strands.

According to another aspect of the present invention, the wire cords may be steelcords.

According to still another aspect of the present invention, the wire cords may be constructed of high tensile steel.

According to yet another aspect of the present invention, the wire cords may be constructed of normal tensile steel.

According to still another aspect of the present invention, the wire cords may be constructed ultra tensile steel.

According to yet another aspect of the present invention, the bead structure may be coreless.

According to still another aspect of the present invention, the pneumatic tire may have no apex.

According to yet another aspect of the present invention, the bead structure may have a triangular cross-section.

According to still another aspect of the present invention, the bead structure may have a rectangular cross-section.

According to yet another aspect of the present invention, the bead structure may have a pentagonal cross-section.

In accordance with the present invention, a pneumatic tire has a bead structure provided therein. The bead structure is preferably defined by a uniform arrangement of between 3-300 or 15-100 wire cords, in cross-section. In one preferred aspect, each wire cord comprises at least one strand wrapped by at least two strands.

According to another preferred aspect of the present invention, the construction of the wire cords is 0.295 mm diameter High Tensile Steel 2 + 2.

According to still another preferred aspect of the present invention, the construction of the wire cords is 0.250 mm diameter Normal Tensile Steel 2 + 2.

According to yet another preferred aspect of the present invention, the construction of the wire cords is 0.210 mm diameter Ultra Tensile Steel 2 + 2.

According to still another preferred aspect of the present invention, the construction of the wire cords is 0.295 mm diameter High Tensile Steel 1 + 2.

According to yet another preferred aspect of the present invention, the construction of the wire cords is 0.270 mm diameter Ultra Tensile Steel 1 + 2.

### Definitions

The following definitions apply to the present invention.

"Apex" means an elastomeric filler located radially above the bead core and between the plies and the turnup ply.

"Annular" means formed like a ring.

"Axial" and "axially" are used herein to refer to lines or directions that are parallel to the axis of rotation of the tire.

"Bead portion" or "bead structure" means that part of the tire comprising an annular tensile member or members and shaped, with or without other reinforcement elements such as flippers, chippers, apexes, toe guards and chafers, to fit a rim. A bead portion or structure may have a central core and an outer sheath surrounding it.

"Cable" means a cord formed by twisting together two or more plied yarns or two or more filaments.

"High Tensile Steel (HT)" means a carbon steel with a tensile strength of at least 3400 MPa at 0.20 mm filament diameter.

"Mega Tensile Steel (MT)" means a carbon steel with a tensile strength of at least 4500 MPa at 0.20 mm filament diameter.

"Normal Tensile Steel (NT)" means a carbon steel with a tensile strength of at least 2800 MPa at 0.20 mm filament diameter.

"Super Tensile Steel (ST)" means a carbon steel with a tensile strength of at least 3650 MPa at 0.20 mm filament diameter.

"Ultra Tensile Steel (UT)" means a carbon steel with a tensile strength of at least 4000 MPa at 0.20 mm filament diameter.

### Brief Description of the Drawings

The structure, operation, and advantages of the present invention may become further apparent upon consideration of the following description taken in conjunction with the accompanying drawings.
FIGURE 1 is a schematic cross-sectional view of an example pneumatic tire for use with the present invention;
FIGURE 2 is a schematic representation of an example bead structure in accordance with the present invention;
FIGURE 3 is a schematic representation of another example bead structure in accordance with the present invention;
FIGURE 4 is a schematic representation of a still another example bead structure in accordance with the present invention; and
FIGURE 5 is a schematic representation of yet another example bead structure in accordance with the present invention.

### Detailed Description of Example Embodiments of the Present Invention

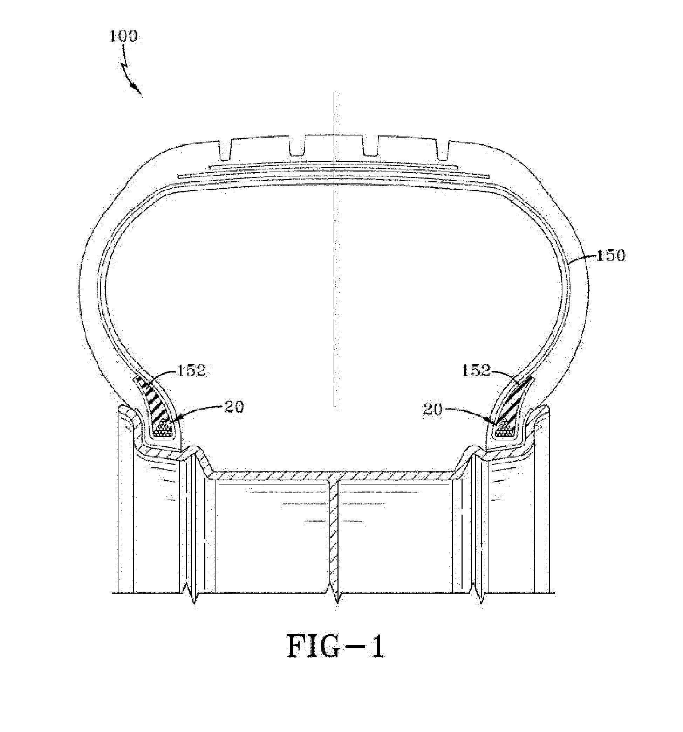

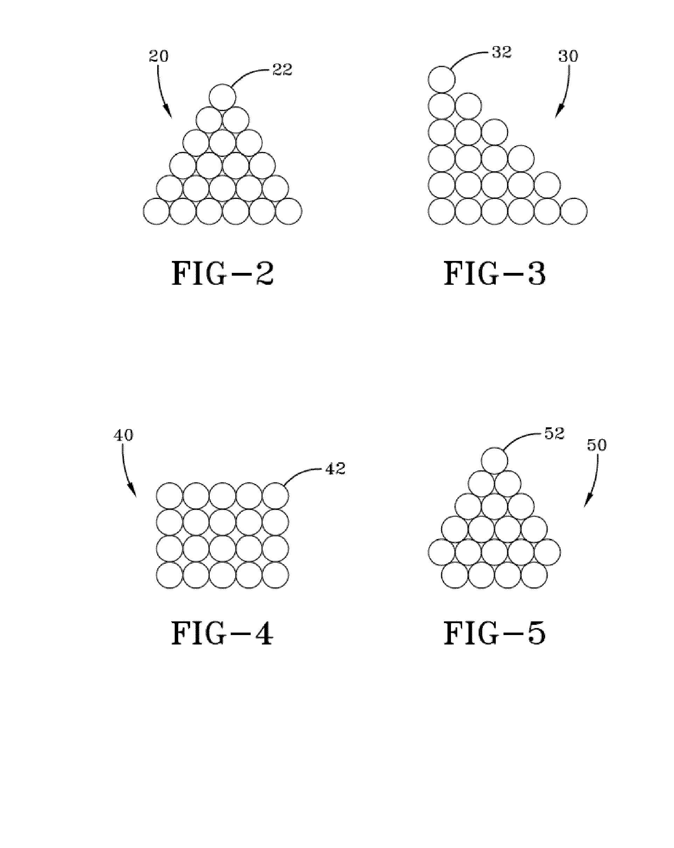

Referring to FIGURES 1 and 2, there is shown a schematic illustration of a pneumatic tire 100 incorporating an example bead structure 20 in accordance with the present invention. The bead structure 20 may be surrounded with a carcass ply 150 and an apex 152. The bead structure 20 may have a core-less (e.g., without a defined or coherent central core, a homogenous arrangement) equilateral triangular configuration (FIGURE 2) of twenty-one cords 22 having a unique construction within the bead portion of a pneumatic tire 100.

The cords 22 may be metal wire, aramid cords, carbon fiber cords, or other suitable materials. In this context, coreless may mean that the interior cords 22 lie adjacent each other, but have no interconnection other than the elastomer matrix and carcass ply 152 securing all of the cords together (e.g., the bead structure 20 has no central core/sheath arrangement, a homogeneous or uniform arrangement in cross-section). Each cord 22 may be metal wire, for example, and have one or more of the following constructions: 0.295 mm diameter High Tensile Steel 2 + 2, 0.250 mm diameter Normal Tensile Steel 2 + 2, 0.210 mm diameter Ultra Tensile Steel 2 + 2, 0.295 mm diameter High Tensile Steel 1 + 2, and 0.270 mm diameter Ultra Tensile Steel 1 + 2, as well as other steelcord, titanium, or other metal constructions.

Alternatively, the bead structure 30 may have a core-less (e.g., without a defined or coherent core) right triangular configuration (FIGURE 3) of twenty-one cords 32 having a unique construction within the bead portion of a pneumatic tire 100. In this context, coreless may mean that the interior cords 32 lie adjacent each other, but have no interconnection other than the elastomer matrix and carcass ply 152 securing all of the wire cords together (e.g., the bead structure 30 has no central core/sheath arrangement, a homogeneous or uniform arrangement in cross-section). Each cord 32 may be metal, for example, and have one or more of the following constructions: 0.295 mm diameter High Tensile Steel 2 + 2, 0.250 mm diameter Normal Tensile Steel 2 + 2, 0.210 mm diameter Ultra Tensile Steel 2 + 2, 0.295 mm diameter High Tensile Steel 1 + 2, and 0.270 mm diameter Ultra Tensile Steel 1 + 2, as well as other steelcord constructions.

Alternatively, the bead structure 40 may have a core-less (e.g., without a defined or coherent core) rectangular configuration (FIGURE 4) of twenty cords 42 having a unique construction within the bead portion of a pneumatic tire 100. In this context, coreless may mean that the interior cords 42 lie adjacent each other, but have no interconnection other than the elastomer matrix and carcass ply 152 securing all of the cords together (e.g., the bead structure 40 has no central core/sheath arrangement, a homogeneous or uniform arrangement in cross-section). Each cord 42 may be metal, for example, and have one or more of the following constructions: 0.295 mm diameter High Tensile Steel 2 + 2, 0.250 mm diameter Normal Tensile Steel 2 + 2, 0.210 mm diameter Ultra Tensile Steel 2 + 2, 0.295 mm diameter High Tensile Steel 1 + 2, and 0.270 mm diameter Ultra Tensile Steel 1 + 2, as well as other steelcord constructions.

Alternatively, the bead structure 50 may have a core-less (e.g., without a defined or coherent core) pentagonal configuration (FIGURE 5) of nineteen cords 52 having a unique construction within the bead portion of a pneumatic tire 100. In this context, coreless may mean that the interior cords 52 lie adjacent each other, but have no interconnection other than the elastomer matrix and carcass ply 152 securing all of the cords together (e.g., the bead structure 50 has no central core/sheath arrangement, a homogeneous or uniform arrangement in cross-section). Each cord 52 may be metal, for example, and have one or more of the following constructions: 0.295 mm diameter High Tensile Steel 2 + 2, 0.250 mm diameter Normal Tensile Steel 2 + 2, 0.210 mm diameter Ultra Tensile Steel 2 + 2, 0.295 mm diameter High Tensile Steel 1 + 2, and 0.270 mm diameter Ultra Tensile Steel 1 + 2, as well as other steelcord constructions.

As shown by the example cords 22, 32, 42, 52 described above, the bead structures 20, 30, 40, 50 may be defined by a homogeneous arrangement of between 3-300 or 15-100 cords with each cord comprising at least one strand wrapped by at least two strands. For example, steelcords 22, 32, 42, 52 may thus be utilized for the bead structures 20, 30, 40, 50 instead of beadwire. The steelcords 22, 32, 42, 52 may be defined by the number of filaments, their diameter, the steel grade and the way of cabling the filaments. Such bead structures 20, 30, 40, 50 may be produced on a conventional bead winder. Further, each steelcord 22, 32, 42, 52 may be coated with elastomer compound (not shown), then wound to form the bead structure 20, 30, 40, 50.

These steelcords 22, 32, 42, 52 may be used to produce conventional bead geometries, such as strap, pentagonal, hexagonal, square, rectangular, or triangular. The number of cords per bead may depend on the cord strength and diameter. New geometries may also be possible to fulfill geometrical and/or functional needs (even replacing the apex 152, for example). Conventional steelcords used for other tire reinforcing applications (e.g. carcass, belt, etc.) may be potential candidates in such a bead application in accordance with the present invention.

These bead structures 20, 30, 40, 50 may improve tire performance characteristics and readily achieve original equipment (OE) requirements. These bead structures may also produce a more robust product, less dependent on manufacturing and mounting tolerances and procedures. These bead structures 20, 30, 40, 50 may further allow a better ability for bead rotation during the shaping/curing process, improve ply line in the bead area, improve seating of the bead on the rim, and improve force transfers between the tire casing and the rim over the whole circumference of the rim. As stated above, a bead structure 20, 30, 40, 50 in accordance with the present invention may produce excellent performance characteristics in a pneumatic tire 100. This structure 20, 30, 40, 50 thus enhances the performance of the tire pneumatic 100, even though the complexities of the structure and behavior of the pneumatic tire are such that no complete and satisfactory theory has been propounded.

## Claims

1. A pneumatic tire comprising a bead structure (20, 30, 40, 50), the bead structure comprising of from 3 to 300 cords (22, 32, 42, 52), each cord (22, 32, 42, 52) comprising at least one strand or filament wrapped by at least two strands or filaments.

2. The tire of claim wherein the bead structure (20, 30, 40, 50) is a homogeneous or uniform arrangement of said cords (22, 32, 42, 52) in cross-section.

3. The tire of claim1 or 2 wherein each cord (22, 32, 42, 52) comprises at least one metal strand or filament wrapped by at least two metal strands or filaments.

4. The tire of at least one of the previous claims wherein the cords (22, 32, 42, 52) are metal wire cords, steel cords, aramid cords, or carbon fiber cords.

5. The tire of at least one of the previous claims wherein the bead structure (20, 30, 40, 50) comprises 15 to 100 cords (22, 32, 42, 52),

6. The tire of at least one of the previous claims wherein the bead structure (20, 30, 40, 50) comprises 15 to 25 cords (22, 32, 42, 52),

7. The tire of at least one of the previous claims wherein each cord (22, 32, 42, 52) consists of one strand or filament wrapped about two strands or filaments.

8. The tire of at least one of the previous claims 1 to 6 wherein each cord (22, 32, 42, 52) consists of two strands or filaments wrapped about two strands or filaments.

9. The tire of at least one of the previous claims wherein the bead structure (20, 30, 40, 50) is without a defined or coherent central core.

10. The tire of at least one of the previous claims wherein the bead structure (20, 30, 40, 50) is of a triangular, an equilateral triangular, a pentagonal, a square, a rectangular, a hexagonal or a strap configuration or cross-section.

11. The tire of at least one of the previous claims wherein the cords (22, 32, 42, 52) are high-tensile steel cords.

12. The tire of at least one of the previous claims wherein the cords (22, 32, 42, 52) are normal-tensile steel cords.

13. The tire of at least one of the previous claims wherein the cords (22, 32, 42, 52) are ultra-tensile steel cords.

14. The tire of at least one of the previous claims wherein the tire (100) has no apex (152).

15. The tire of at least one of the previous claims wherein the cords (22, 32, 42, 52) are steel cords, preferably high-tensile steel cords, having a diameter of the strands or filaments in a range of from 0.2 to 0.31 mm such as 0.295 mm, 0.25 mm, 0.27 mm or 0.21 mm.
